Europäisches Patentamt

European Patent Office

Office européen des brevets

(19)

(11) Publication number: **0 046 357**
**B1**

(12) **EUROPEAN PATENT SPECIFICATION**

(45) Date of publication of patent specification: **09.05.84**

(21) Application number: **81303620.9**

(22) Date of filing: **07.08.81**

(51) Int. Cl.³: **C 04 B 35/10,**
**H 01 M 10/39, H 01 M 6/20**

(54) Solid electrolyte material incorporating beta-alumina ceramic, its manufacture and sodium-sulphur cells and other energy conversion devices utilising such material.

(30) Priority: **19.08.80 GB 8027008**
**19.08.80 GB 8027009**
**19.08.80 GB 8027010**

(43) Date of publication of application:
**24.02.82 Bulletin 82/8**

(45) Publication of the grant of the patent:
**09.05.84 Bulletin 84/19**

(84) Designated Contracting States:
**DE**

(56) References cited:
**EP - A - 0 032 033**
**DE - A - 2 824 750**
**GB - A - 2 034 960**
**US - A - 4 206 016**

(73) Proprietor: **CHLORIDE SILENT POWER LIMITED**
**52 Grosvenor Gardens**
**London, SW1W 0AU (GB)**

(72) Inventor: **Ansell, Raymond Owen**
**29 Thirlmere Close**
**Frodsham Warrington (GB)**
Inventor: **Heavens, Stephen Nicholas**
**2 Maplewood Grove**
**Saughall Chester (GB)**
Inventor: **Jones, Ivor Wynn**
**25 Upton Park**
**Chester Cheshire (GB)**

(74) Representative: **Rennie, Ian Malcolm et al,**
**BOULT, WADE & TENNANT 27 Furnival Street**
**London EC4A 1PQ (GB)**

Courier Press, Leamington Spa, England.

## Description

This invention relates to solid electrolyte material, its manufacture and to sodium-sulphur cells and other energy conversion devices using solid electrolyte material.

Beta-alumina ceramic material is well-known as a solid electrolyte in electrochemical cells and other energy conversion devices employing liquid sodium. One example of such a device is a sodium-sulphur cell in which the beta-alumina electrolyte material separates molten sodium from molten sulphur/sodium polysulphides.

It is well-known that beta-alumina electrolyte material becomes degraded when used in a sodium-sulphur cell. The material becomes blackened. One of the factors that may determine the durability of the beta-alumina electrolyte in such cells is the existence of strength controlling micro-cracks at the surface of the electrolyte which is in contact with the sodium. There is some evidence that strain can develop and surface cracks can grow during the passage of sodium ions into the electrolyte material and some statistical evidence suggests that the observed lifetimes of cells are consistent with a failure mechanism in the ceramic electrolyte caused by accelerating crack growth from a distribution of surface flaws. Similar conditions exist in other forms of energy devices using beta-alumina electrolyte material, for example thermo-electric generators in which a temperature difference is maintained between sodium-containing regions on opposite sides of a beta-alumina electrolyte membrane.

The breakdown of beta-alumina ceramic electrolyte in a cell is discussed in the Paper by R. D. Armstrong, T. Dickinson and J. Turner, Electrochimica Acta, 1974, Vol. 19 pages 187—192. In that Paper it is suggested that the breakdown problems may start with micro cracks and it is proposed to grind the surface of the electrolyte with a diamond wheel, mechanically polish it using a diamond lapping compound and then fill the surface with a sealing glass. The glass was ground to a fine powder, applied to the electrolyte surface which had previously been wetted with methylated spirit and, after excess glass was removed by drawing a tissue across the surface, the electrolyte was fired at 1000°C. The objective in this prior proposal was to fill micro cracks and surface pores with a non-ionically conductive material to prevent such surface imperfections acting as centres of stress concentration when filled with sodium. It is suggested in that Paper that dendritic growth occurs with penetration of sodium into the electrolyte and to prevent this sodium penetration, a non-conductive sealing glass was used. Such a glass cannot cover the whole surface of the electrolyte as this would prevent functioning of a cell and, for that reason, this prior proposal was concerned only with filling surface pores and cracks.

In DE—A—2824750, there is described an article for use in an energy conversion device comprising a substrate of beta-alumina having a coating which prevents passage of sodium ions.

According to the present invention a beta-alumina electrolyte element for use as a solid electrolyte in an energy conversion device using liquid sodium is characterised by a substrate of beta-alumina having a protective coating, over at least the part of its surface exposed to sodium when used, of a material which is ionically conductive for sodium ions. The coating may, for example, be of a glass or solid material formed either by calcining a sodium-doped sol or sol-gel applied to the surface or applied as a solution or dispersion which is fired after evaporating the solvent.

In a sodium-sulphur cell or other energy conversion device employing liquid sodium, the coating is provided over that part of the surface which is exposed to liquid sodium. The coating is over substantially the whole of the exposed surface which is to be protected. Such a coating permits the passage of sodium ions into the beta-alumina but serves to prevent the penetration of the liquid sodium into the pores and microcracks in the substrate.

The coating preferably has a thickness much less than that of the substrate. In the case of a glass coating, typically the thickness is not greater than 10 microns.

Conductive glasses typically have a bulk resistivity which is significantly greater than that of beta-alumina such as is used in electrochemical cells. The coating therefore is made thin to minimise increase in cell resistance. It is readily possible to obtain a coating of the order of 1 $\mu$m thickness if necessary. So far as possible, the coating is made complete over the surface area to be protected to form a smooth continuous flaw-free protective layer.

In a sodium-sulphur cell, in which the electrolyte element separates sodium, which is molten at the operating temperature of the cell from a cathodic reactant comprising sulphur/-sodium polysulphides, the coating would be provided over the region exposed to the liquid sodium as described above. A coating of the ionically conductive glass may also be put over the face of the electrolyte material exposed to the sulphur/sodium polysulphides. On this face, the coating is not for the purpose of preventing sodium penetration but in order to increase the resistance of the cell to voltage breakdown. On this surface, breakdown occurs primarily due to ionic depletion in the surface layer of the beta-alumina and a thin coating of an ionically conductive glass assists in preventing such localised ionic depletion owing to its high breakdown strength compared with that of beta-alumina.

The invention furthermore includes within its scope an electrochemical cell or other energy-conversion device having a solid electrolyte element with at least part of the electrolyte element exposed to liquid sodium wherein the electrolyte element comprises a beta-alumina substrate characterised by a beta-alumina substrate having a coating of material which will conduct sodium ions, the coating being over at least that part of the electrolyte element exposed to liquid sodium. The material may be an ionically conductive glass.

In the case of a sodium-sulphur cell, for the reasons discussed above, the surface of the electrolyte element exposed to the sulphur/polysulphides, may also have a coating of ionically-conductive glass which will conduct sodium ions.

The glass coating is made as thin as possible compatible with having a substantially continuous non-porous coating layer to provide a physical barrier between the beta-alumina and the sodium and/or sulphur/sodium polysulphides. It has been found readily possible to form coatings approximately 10 $\mu$m thick or less which will give complete coverage with no crazing.

Many glasses are known which will conduct sodium ions. Broadly speaking the higher the sodium oxide content, the better is the ionic conductivity. The composition however has to be chosen so that the material is in the "glass forming" region.

Examples of ionically conductive glasses with high proportions of sodium are as follows:

    (a) 45 $Na_2O$. 55 $SiO_2$
    (b) 55 $Na_2O$. 45 $P_2O_5$

These two glasses have resistivities, measured at 350°C, of 100 ohm cm and 170 ohm cm respectively.

Other glass compositions which might be used are:

    (c) $Na_2O$ . $Al_2O_3$ . $SiO_2$
    (d) 1.8 $Na_2O$ . $Al_2O_3$ . $SiO_2$
    (e) 35 $Na_2O$ . 65 $TeO_2$
    (f) $NaPO_3$ . $NaVO_3$
    (g) 3 $Na_2O$ . $B_2O_3$ . $P_2O_5$
    (h) 5 $Na_2O$ . $2B_2O_3$ . $3P_2O_5$
    (i) 11 $Na_2O$ . $5B_2O_3$ . $4P_2O_5$ . $ZrO_2$
    (k) 35 $Na_2O$ . $65B_2O_3$

Many other sodium ion conductive glasses however are well-known in the glass making art.

The glass may be applied to the beta-alumina using known glazing techniques. For example the glass may be finely powdered and then applied as a dispersion in a suitable dispersion medium. An organic dispersion medium may be employed to avoid any possibility of ion exchange with the beta-alumina. The dispersion medium may be removed by evaporation at a temperature below the sintering temperature of the beta-alumina. Temperatures up to 1100°C may be employed for firing to remove the dispersion medium and ensure a uniform smooth impermeable glazed coating free of flaws.

In one method of manufacture of a solid electrolyte element, the surface of the substrate is coated with a dispersion, in an evaporable liquid, of a powdered glass which is conductive for sodium ions, and heating the coated substrate to a temperature below the sintering temperature of the beta-alumina to evaporate the liquid and to form a smooth glass coating.

The substrate is generally a thin element of uniform thickness, e.g. a plate or, more commonly a tube. On such an element the coating may be applied to both faces. The dispersion medium is preferably an organic liquid.

One of the requirements in the choice of the glass material is the bulk resistivity. The thinner the coating that is applied, the greater bulk resistivity that can be tolerated without significant detraction from cell performance through higher internal resistance of the cell. If the layer is to be of the order of 1 $\mu$m thick, then preferably one selects a glass having a bulk resistivity not greater than $10^3$ ohm cm at the required operating temperature. The ionic conductivity of glass is usually temperature-dependent and, for use in sodium-sulphur cells, one would therefore prefer to have a resistivity not more than $10^4$ ohm cm at 350°C. More preferably a lower resistivity e.g. of less than 300 ohm cm at 350°C would be desirable to enable a thicker coating to be used.

The glass must be a stable glass and in particular it should not devitrify under the operating conditions in the cell because of the resultant loss of conductivity.

Another method of manufacture of beta-alumina ceramic electrolyte material, comprises applying to the substrate a solution of an ionizable sodium compound which is soluble in the solvent, evaporating the solvent and then firing the coated substrate at a temperature below the sintering temperature of the beta-alumina, the sodium compound being such as to give, after firing, a coating which is ionically conductive for sodium ions.

For use in a cell, such as a sodium-sulphur cell, the coating has to be ionically conductive at the operating temperature of the cell. Thus, for electrolyte to be used in a sodium-sulphur cell, the sodium compound is chosen so that it produces a coating which is ionically conductive for sodium ions at the cell operating temperature, typically 350°C. The coating may be very thin and thus higher ionic resistances can be tolerated compared with glass coatings. Preferably, however, the resistivity is less than $5 \times 10^4$ ohm cm.

A convenient material to use is sodium tetraborate which, in aqueous solution, may be painted on the surface of a beta-alumina ceramic element and dried at a temperature above the boiling point of water and which may then be fired at 650°C. It is possible with this technique to obtain a very thin coating.

Repeated applications of the solution and drying may be used to ensure a homogeneous layer over the surface of the element. The multi-layer coating can then be fired to give a smooth homogeneous layer. Alternatively the material may be fired after application of each separate layer. The coating can be made extremely thin but will provide resistance to attack by sodium.

Sodium tetraborate is one sodium compound to use because of the good ionic conductivity and its good resistance to sodium. Another material which may be employed is sodium silicate. Sodium phosphate is another material which may be used.

Aqueous solutions of the sodium compound are conveniently employed but it is possible to use solutions in other solvents.

The invention includes within its scope a method including the applying to the surface of the substrate an aqueous solution of sodium tetraborate, evaporating the water and then firing the coated component at a temperature in the range 600°C to 750°C.

Another method includes the steps of applying to the surface of the substrate an aqueous solution of sodium silicate and then firing the coated component at a temperature in the range 1000°C to 1100°C.

As stated above, the coating may be formed by calcining a sodium-doped sol or sol-gel applied to that part of the surface. Such a coating is conveniently a sodium-doped alumina. By applying the coating in the form of a sol, or more commonly in the form of a sol-gel since the sodium dopant tends to gel a sol, it is possible to obtain a smooth craze-free coating which is ionically conductive. This coating covers any micro-cracks.

In a sodium-sulphur cell or other energy conversion device employing liquid sodium, the coating is required over that part of the surface which is exposed to the liquid sodium. Thus, in a sodium sulphur cell having a beta-alumina electrolyte separating an anodic region containing sodium from a cathodic region containing sulphur/polysulphides, said coating may extend over at least that part of the surface of the article exposed to the sodium in the anodic region. The electrolyte in such a cell may be formed as a flat plate but more commonly is in the form of a tube. In either case, the material separates the anodic and cathodic regions and the coating need only be applied to the surface exposed to the anodic region, e.g. on the inside or outside of the tube according to whether the sodium in the cell is in the tube or around it.

In a method using a sodium-doped sol or sol-gel which is coated over the electrolyte and then calcined, the sol or sol-gel may be formed of particles of a material which, when sodium-doped and calcined, is conductive of sodium ions. The coating may be a sol of particles of alumina doped with sodium ions to form a sol-gel which, on calcining forms a beta-alumina coating. However, other sodium ion conductive coatings may be employed, for example sodium beta-ferrite.

Aqueous sols of alumina have a tendency to gel on the addition of sodium salts. This tendency may be reduced by increasing the water content. One method is to form a clear sol of for example alumina and then to add the dopant.

The clear sol may be made by peptising an aqueous slurry and then the sodium dopant is added, preferably as a weak electrolyte, for example, sodium acetate.

Various ways may be used for forming a sol of alumina. One convenient method is by hydrolysis of aluminium isopropoxide or isobutoxide by vigorous agitation in excess of water and peptising the resulting slurry to a clear sol by the addition of nitric, hydrochloric or acetic acid (typically using 0.03 to 0.1 mole acid per mole alkoxide) with heat treatment at, for example, 80—95°C for a sufficient time. This technique is described in "Alumina sol preparation from Alkoxides" by B. E. Yoldas, Amer. Ceram. Soc. Bull. *54* (3) 289—90, 1975. Sodium acetate is conveniently used for doping such a sol.

Another method of forming an alpha-alumina sol is by dispersing alpha-alumina monohydrate in water containing nitric acid, in this case sodium carbonate solution is conveniently used as the dopant (see for example U.S. Specification No. 4,052,538).

Other techniques for preparing sodium-doped alumina sols are described in British Patent Specification No. 1,386,244, for example thermal denitration of hydrated aluminium nitrate to form a water dispersible product which can be dispersed in boiling water and then doped by adding a thermally decomposable water soluble sodium salt, e.g. sodium nitrate or oxalate or acetate. Another technique is by chemical substitution of chloride ions in aluminium chlorhydrate solution with nitrate ions, e.g. with concentrated ammonia solution, and then dispersing the gel in nitric acid to form a sol which can be doped with a sodium salt.

The electrolyte material may be dip-coated in the sodium-doped sol. In the case of a sodium-doped alumina sol the article, after coating with the sol and allowing to dry at room temperature, may be heat-treated at a temperature between 700°C and 1500°C, preferably in the range of 900°C to 1200°C and more preferably in the range of 1050 to 1100°C to calcine the coating.

Preferably the coating is very thin, typically of the order of one $\mu$m. It has been found that such a thin coating is sufficient to provide almost complete surface coverage despite the fact that, on a typical sintered beta alumina ceramic article, the largest asperities may be of the order of 5 $\mu$m above the mean level of the surface. Too thick a coating is liable to cause crazing of the coating on calcining. Likewise there is a slight tendency for increased crazing as the heat treatment temperature or duration is increased. Preferably therefore the heat treatment is not above 1100°C and is not for more than 30 minutes.

The following are a number of examples of the invention.

Example 1

A tube of beta-alumina, closed at one end, was made, in the known way, by forming a green shape of isostatically pressed finely powdered mixed oxide material and sintering the shape using a pass-through furnace. Such techniques are described for example in U.K. Patent Specifications Nos. 1297323, 1375167, 1458221, 1458222 and 1558305. The tube was for use in a sodium-sulphur cell as a solid electrolyte element separating molten sodium, around the outside of the tube, from a cathodic reactant inside the tube, the cathodic reactant comprising sulphur/sodium polysulphides. A glass for coating the tube was fabricated by calcining 20 g sodium metaphosphate with 1.35 g anhydrous sodium carbonate in an alumina crucible at 700°C and quenching rapidly onto a steel plate to produce a clear glass of composition $55Na_2O.45P_2O_5$. The glass was pulverised in a mill, filtered through a 75 $\mu$m sieve and dispersed in a solvent manufactured by Thorn Electrical Ltd. (amyl acetate containing cellulose binder) in the proportion 80 g powder to 250 ml. solvent to form a slurry. The outer surface of the tube was given a thin glass coating, about 10 $\mu$m thick, by dipping the tube in the slurry, allowing to dry and then heating the tube to evaporate the dispersion medium. The heating was to a temperature of 1100°C, which was below the sintering temperature (about 1750°C) of the beta-alumina but above the melting point of the glass which formed a thin continuous craze-free coating over the beta-alumina.

Example 2

A beta-alumina ceramic tube was made in the known way by firing mixed oxide material or powdered beta-alumina, as is described for example in British Patent Specification No. 1297373. This tube was then painted with an aqueous solution containing 10 grams of sodium tetraborate per litre and dried at 118°C to evaporate the water. This treatment was repeated until three coats of sodium tetraborate had been deposited. In this particular example, the electrolyte tube was for use in a sodium sulphur cell in which liquid sodium constituting the anode covers the outer surface of the tube and in which the cathode structure containing the cathodic reactant (sulphur/sodium polysulphides) was on the inside of the tube. The coating of sodium tetraborate was applied over the external surfaces of the tube which would be exposed to the liquid sodium when the tube was in use in the cell. After the three coats had been deposited, the tube was fired in air at 650°C. After firing, examination of the tube with a scanning electron microscope showed a smooth homogeneous layer without the micro-cracks and surface micro irregularities of uncoated beta-alumina. The conductivity of the coated article, when measured using an alternating current technique, was not discernably different from that of an uncoated article.

The electrolyte tube formed as described above was exposed to sodium in a sodium-sodium cell that allowed the passage of sodium ions through the ceramic and coating. A stable resistance of the electrolyte of 2.7 ohm cm. square was observed for a 1.7 mm thick ceramic. This resistance was stable over a period of 15 days at a current of 50 mA per square cm. Ceramic electrolyte tubes coated in this way were used also in sodium sulphur cells under repetitive charge/discharge cycling conditions. The electrical and electro-chemical behaviour was similar to that of cells with uncoated ceramic material. However the coating provides a measure of protection against breakdown of the electrolyte material by sodium penetration into the material.

Example 3

A beta-alumina ceramic tube was made in the known way by firing mixed oxide material or powdered beta-alumina, as is described in for example British Patent Specification No. 1297373. This tube was then painted with an aqueous solution containing 63 g/l of sodium silicate. The tube was dried in air at 100°C and then fired at 1000°C for 1 hour and allowed to cool in the furnace.

The coated beta-alumina tube was subjected to sodium ion passage in a sodium sodium cell for a period 4 months. The surface of the coated beta was examined using a scanning electron microscope and the coating found still to be present.

Sixteen sodium sulphur cells containing ceramic coated in this way have been tested. The longest lived cell has been charged and discharged over a period of 200 days.

Example 4

In this example, a beta-alumina polycrystalline ceramic electrolyte tube was made as previously described in a pass-through furnace and was then coated with a sodium-doped alumina sol. To produce this coating, a sodium ion-doped alumina sol-gel was prepared by hydrolysing 22.7 grams of aluminium isopropoxide by agitation in 200 mls of double distilled deionised water at 75°C for 20 minutes. 1 ml of concentrated hydrochloric acid was added and the slurry was heated under reflux at 93°C for several days (1—7 days, typically 4), thereby peptising the slurry to a clear sol. Sodium acetate was added to the sol to give a 5:1 alumina to soda molar ratio. Addition of this dopant caused the sol to become opaque and highly viscous but the tendency to gel can be reduced by dilution with water if necessary. The increased viscosity arising from the gelling however is beneficial in facilitating the formation of uniform coating on the tube. Samples of ceramic electrolyte tubes prepared as described above were dip-coated using the sodium ion-doped alumina sol-gel. The sodium ion-doped sol-gel has a considerably higher viscosity than an undoped alumina sol and is much easier to apply, giving a coating that is uniform in thickness and adheres readily over the whole surface. The thickness of the coating obtained by the dipping operation can be adjusted by dilution of the sol with water. The optimum coating has a thickness of the order of 1 $\mu$m.

After coating with the sol-gel, the tubes were heat-treated at a temperature of 1050°C to 1100°C. For this heat treatment the tubes were slowly heated, taking about 7 hours to reach the maximum temperature, and were then held at the maximum temperature for 30 minutes. The slow temperature rise is to avoid crazing; it also helps to ensure uniformity of thickness of the coating.

Scanning electron micrographs of tubes treated in this way indicate good coverage of the surface of the tube although occasional short cracks about 2 $\mu$m wide occur. The completeness of coverage and avoidance of local crazing depend largely on the surface condition of the ceramic substrate. Any tendency for the coating to split can be substantially reduced by diluting the doped sol with water and it may be preferred to dilute the above-described sol-gel with water in the ratio of 1:1 by volume. This results in a thinner coating with very little cracking.

With sodium ion-doped sols, there is only a slight tendency for increased crazing as the heat treatment temperature or duration is increased; thus the duration and temperature are less critical. Conversion of the sodium-doped alumina into beta'' alumina would be expected to occur in the region of 900 to 1200°C and measurements of the resistivity of the coating suggest that such a conversion occurs with the heat treatment described above.

Example 5

In this example the outer surface of a polycrystalline beta-alumina ceramic electrolyte tube was coated with an alumina sol doped with sodium metasilicate. The alumina sol was produced by the method described in Example 4. Anhydrous sodium metasilicate was added to the sol in the proportion 4.76 g sodium metasilicate to 100 ml sol. Addition of the dopant caused the sol to gel but this tendency could be prevented by dilution with water. The beta-alumina electrolyte tube was dip-coated in the sodium silicate-doped alumina sol and allowed to dry. The tube was then fired at 1300°C to produce a thin ionically-conductive glass coating of the composition $2Na_2O\ Al_2O_3\ SiO_2$.

For coating beta-alumina tubes, it is convenient to use a sodium-doped alumina sol which is calcined as described in the foregoing example. The technique described in the above example enable a very thin but continuous layer of the sol to be put over the surface of the beta-alumina article. With a thin layer, dehydration on heating and calcining results in contraction only in directions normal to the surface leaving a continuous coating over the whole surface. It has been found possible thereby to obtain smooth craze-free and stable continuous coatings which are ionically conductive for sodium ions.

Such coatings however can also be produced with other sodium-ion conductive materials, for example sodium beta-ferrite. Such coatings may be applied using a similar technique to those described above namely the formation of a doped sol which is applied to the surface of the article and then calcined.

Claims

1. A beta-alumina electrolyte element for use as a solid electrolyte in an energy conversion device using liquid sodium characterised by a substrate of beta-alumina having a protective coating, over at least part of its surface exposed to the sodium when used, of a material which is ionically conductive for sodium ions.

2. An electrolyte element according to claim 1 characterised in that the coating consists of glass.

3. An electrolyte element as claimed in either of the preceding claims wherein the coating is of a thickness substantially less than the thickness of the substrate.

4. An electrolyte element as claimed in claim 2 wherein the coating has a bulk resistivity of not more than $10^4$ ohm cm at 350°C.

5. An electrolyte element according to claim 1 characterised in that the coating is formed by calcining a sodium-doped sol or sol-gel applied to that part of the surface.

6. An electrolyte element as claimed in claim 5 characterised in that said coating comprises sodium-doped alumina.

7. An electrolyte element as claimed in claim 5 characterised in that said coating comprises a beta-ferrite.

8. An electrolyte element according to claim 1 characterised in that the coating is a smooth layer of a sodium compound formed by firing at a temperature below the sintering temperature of the beta-alumina.

9. An electrolyte element as claimed in claim 8 characterised in that the coating has an ionic resistivity for sodium ions of less than $5\times10^4$ ohm cm.

10. A sodium-sulphur cell having a beta-alumina electrolyte element separating an anodic region containing sodium from a cathodic region containing sulphur/sodium polysulphides characterised by an element as claimed in any of the preceding claims.

11. A sodium-sulphur cell as claimed in claim 10 characterised in that said element is a tube with the coating on the inside or on the outside of the tube.

12. A method of making a beta-alumina electrolyte element for use as a solid electrolyte in an energy conversion device using liquid sodium characterised by sintering of oxide material to form a beta-alumina ceramic substrate, and applying, to at least the part of its surface exposed to sodium when used, a coating of a material which is ionically conductive for sodium ions.

13. A method according to claim 12 characterised by applying glass as material for the coating.

14. A method according to claim 13 characterised by coating the surface of the substrate with a dispersion, in an evaporable liquid, of a powdered glass which is conductive for sodium ions, and heating the coated substrate to a temperature below the sintering temperature of the beta-alumina to evaporate the liquid and to form a smooth glass coating.

15. A method as claimed in claim 14 characterised in that the dispersion medium is an organic liquid.

16. A method according to claim 12 characterised by applying to the surface of the substrate a solution of an ionizable sodium compound which is soluble in the solvent, evaporating the solvent and then firing the coated substrate at a temperature below the sintering temperature of the beta-alumina, the sodium compound being such as to give, after firing, a coating which is ionically conductive for sodium ions.

17. A method as claimed in claim 16 characterised in that, before firing, a plurality of coatings of said solution are applied, the solvent being evaporated before applying the next coating.

18. A method as claimed in either claim 16 or claim 17 characterised in that the sodium compound is such as to give a coating having a resistivity of less than $5 \times 10^4$ ohm cm.

19. A method as claimed in any of claims 16 to 18 characterised in that the sodium compound is sodium tetraborate.

20. A method as claimed in any of claims 16 to 18 characterised in that the sodium compound is sodium silicate or sodium phosphate.

21. A method according to claim 19 characterised by applying to the surface of the substrate an aqueous solution of sodium tetraborate, evaporating the water and then firing the coated component at a temperature in the range 600°C to 750°C.

22. A method according to claim 20 characterised by applying to the surface of the substrate an aqueous solution of sodium silicate or sodium phosphate and then firing the coated component at a temperature in the range 1000°C to 1100°C.

23. A method as claimed in either claim 21 or claim 22 characterised in that, before firing, a plurality of coatings of said solution are applied, the water being evaporated before applying the next coating.

24. A method according to claim 12 characterised by coating the surface of the substrate with a sodium-doped sol or sol-gel and then calcined, the sol or sol-gel being formed of particles of a material which, when sodium-doped and calcined, is conductive of sodium ions.

25. A method as claimed in claim 24 characterised in that the coating is a sol of particles of alpha-alumina doped with sodium ions to form a sol-gel which forms beta-alumina on calcining.

26. A method as claimed in claim 24 characterised in that the coating is of sodium beta-ferrite.

27. A method as claimed in claim 24 characterised in that the coating is initially formed of alpha-alumina into which sodium ions are diffused.

28. A method as claimed in claim 24 characterised in that the coating material is doped sol-gel made by firstly forming a clear sol of alpha-alumina and then adding the sodium dopant.

29. A method as claimed in claim 28 characterised in that the sodium dopant is a sodium salt of a weak acid.

30. A method as claimed in claim 28 characterised in that the sodium dopant is sodium acetate.

31. A method as claimed in any of claims 28 to 30 characterised in that the clear sol of alpha-alumina is made by peptising an aqueous slurry of alpha-alumina formed by hydrolysing aluminium isopropoxide or aluminium butoxide.

32. A method as claimed in any of claims 24 to 31 characterised in that the sintered beta-alumina article is dip-coated in the sodium-doped sol or sol-gel.

33. A method as claimed in any of claims 24 to 32 characterised in that the article, after coating with the sol or sol-gel, is heat-treated at a temperature between 700°C and 1500°C to calcine the coating.

34. A method as claimed in claim 33 characterised in that the heat treatment is at a temperature in the range of 900°C to 1200°C.

35. A method as claimed in claim 30 characterised in that the heat treatment is at a temperature in the range of 1050°C to 1100°C.

36. A method as claimed in any of claims 33 to 35 characterised in that the heat treatment is for not more than 30 minutes at the peak calcining temperature.

37. A method as claimed in any of claims 24 to 36 characterised in that the coating is less than 2 $\mu$m in thickness.

38. An electrochemical cell or other energy conversion device having a solid electrolyte element with at least part of the surface of the electrolyte element exposed to liquid sodium wherein the electrolyte element comprises a beta-alumina substrate characterised by said beta-alumina substrate having a coating of a material which will conduct sodium ions, the coating being over at least that part of the electrolyte element exposed to liquid sodium.

## Patentansprüche

1. Ein $\beta$-Aluminimoxid enthaltendes elektrolytisches Element zur Verwendung als fester Elektrolyt in einer Energieumwandlungsanlage unter Verwendung von flüssigem Natrium, gekennzeichnet durch ein Substrat aus ß-Aluminiumoxid, das auf mindestens einem Teil seiner Oberfläche, der bei der Verwendung dem Natrium ausgesetzt ist, einen Überzug aus einem Material besitzt, das für Natrium-Ionen ionisch leitfähig ist.

2. Elektrolytisches Element nach Anspruch 1, dadurch gekennzeichnet, daß der Überzug aus Glas besteht.

3. Elektrolytisches Element nach einem der vorhergehenden Ansprüche, dadurch gekennzeichnet, daß der Überzug eine Dicke besitzt, die wesentlich geringer ist als die Dicke des Substrats.

4. Elektrolytisches Element nach Anspruch 2, dadurch gekennzeichnet, daß der Überzug einen Bahnwiderstand von nicht mehr als $10^4$ Ohm-cm bei 350°C besitzt.

5. Elektrolytisches Element nach Anspruch 1, dadurch gekennzeichnet, daß der Überzug durch Calcinieren eines auf diesen Teil der Oberfläche aufgebrachten, mit Natrium dotierten Sols oder Sol-Gels gebildet wird.

6. Elektrolytisches Element nach Anspruch 5, dadurch gekennzeichnet, daß der Überzug mit Natrium dotiertes Aluminiumoxid umfaßt.

7. Elektrolytisches Element nach Anspruch 5, dadurch gekennzeichnet, daß der Überzug einen ß-Ferrit umfaßt.

8. Elektrolytisches Element nach Anspruch 1, dadurch gekennzeichnet, daß der Überzug eine gleichmäßige Schicht einer Natriumverbindung ist, die durch Backen bei einer Temperatur unterhalb der Sintertemperatur des ß-Aluminiumoxids gebildet wird.

9. Elektrolytisches Element nach Anspruch 8, dadurch gekennzeichnet, daß der Überzug einen Ionenwiderstand für Natriumionen von weniger als $5 \times 10^4$ Ohm-cm besitzt.

10. Natrium-Schwefel-Zelle mit einem ß-Aluminiumoxid enthaltenden elektrolytischen Element, das einen Natrium enthaltenden Anodenraum von einem Schwefel/Natrium-Polysulfide enthaltenden Kathodenraum trennt, gekennzeichnet durch ein Element nach einem der vorhergehenden Ansprüche.

11. Natrium-Schwefel-Zelle nach Anspruch 10, dadurch gekennzeichnet, daß das Element eine Röhre ist, die den Überzug an der Innenseite oder an der Außenseite der Röhre enthält.

12. Verfahren zur Herstellung eines ß-Aluminiumoxid enthaltenden elektrolytischen Elements zur Verwendung als fester Elektrolyt in einer Energieumwandlungsanlage unter Verwendung von flüssigem Natrium, dadurch gekennzeichnet, daß man oxidisches Material unter Bildung eines Substrats aus ß-Aluminiumoxid-Keramik sintert und auf mindestens einen Teil seiner Oberfläche, der bei der Verwendung dem Natrium ausgesetzt ist, einen Überzug eines Materials aufbringt, der für Natriumionen ionisch leitfähig ist.

13. Verfahren nach Anspruch 12, dadurch gekennzeichnet, daß man als Überzugsmaterial Glas aufbringt.

14. Verfahren nach Anspruch 13, dadurch gekennzeichnet, daß man die Oberfläche des Substrats mit einer Dispersion eines gepulverten Glases in einer verdampfbaren Flüssigkeit überzieht, und das überzogene Substrat auf eine Temperatur unterhalb der Sintertemperatur des ß-Aluminiumoxids erhitzt, um die Flüssigkeit zu verdampfen und einen gleichmäßigen Glasüberzug zu bilden.

15. Verfahren nach Anspruch 14, dadurch gekennzeichnet, daß das Dispersionsmedium eine organische Flüssigkeit ist.

16. Verfahren nach Anspruch 12, dadurch gekennzeichnet, daß man auf die Oberfläche des Substrates eine Lösung einer ionisierbaren Natriumverbindung aufbringt, die in dem Lösungsmittel löslich ist, das Lösungsmittel verdampft und dann das überzogene Substrat auf eine Temperatur unterhalb der Sintertemperatur des ß-Aluminiumoxids erhitzt, wobei die Natriumverbindung eine solche ist, die nach dem Erhitzen einen Überzug ergibt, der für Natriuminonen ionisch leitfähig ist.

17. Verfahren nach Anspruch 16, dadurch gekennzeichnet, daß man vor dem Erhitzen eine Vielzahl von Überzügen dieser Lösung aufbringt, wobei das Lösungsmittel vor dem Aufbringen des nächsten Überzuges verdampft wird.

18. Verfahren nach Anspruch 16 oder 17, dadurch gekennzeichnet, daß die Natriumverbindung eine solche ist, die einen Überzug ergibt, der einen Widerstand von weniger als $5 \times 10^4$ Ohm-cm besitzt.

19. Verfahren nach einem der Ansprüche 16 bis 18, dadurch gekennzeichnet, daß die Natriumverbindung Natriumtetraborat ist.

20. Verfahren nach einem der Ansprüche 16 bis 18, dadurch gekennzeichnet, daß die Natriumverbindung Natriumsilikat oder Natriumphosphat ist.

21. Verfahren nach Anspruch 19, dadurch gekennzeichnet, daß man auf die Oberfläche des Substrats eine wäßrige Lösung von Natriumtetraborat aufbringt, das Wasser verdampft und dann die überzogene Komponente bei einer Temperatur im Bereich von 600°C bis 750°C erhitzt.

22. Verfahren nach Anspruch 20, dadurch gekennzeichnet, daß man auf die Oberfläche des Substrates eine wäßrige Lösung von Natriumsilikat oder Natriumphosphat aufbringt und dann die überzogene Komponente bei einer Temperatur im Bereich von 1000°C bis 1100°C erhitzt.

23. Verfahren nach Anspruch 21 oder 22, dadurch gekennzeichnet, daß man vor dem Erhitzen eine Vielzahl von Überzügen der Lösung aufbringt, wobei das Wasser vor dem Aufbringen des nächsten Überzuges entfernt wird.

24. Verfahren nach Anspruch 12, dadurch gekennzeichnet, daß man die Oberfläche des Substrats mit einem mit Natrium dotierten Sol oder Sol-Gel überzieht und dann calciniert, wobei das Sol oder Sol-Gel aus Teilchen eines Materials gebildet wird, welches, wenn es mit Natrium dotiert und calciniert ist, für Natriumionen leitfähig ist.

25. Verfahren nach Anspruch 24, dadurch gekennzeichnet, daß der Überzug ein Sol aus mit Natriumionen dotierten Teilchen aus $\alpha$-Aluminiumoxid ist, um ein Sol-Gel zu bilden, das beim Calcinieren ß-Aluminiumoxid bildet.

26. Verfahren nach Anspruch 24, dadurch gekennzeichnet, daß der Überzug Natrium-ß-Ferrit ist.

27. Verfahren nach Anspruch 24, dadurch gekennzeichnet, daß der Überzug zunächst aus $\alpha$-Aluminiumoxid gebildet wird, in das Natriumionen eindiffundiert werden.

28. Verfahren nach Anspruch 24, dadurch gekennzeichnet, daß das Überzugsmaterial ein dotiertes Sol-Gel ist, das hergestellt wird, indem man zuerst ein klares Sol von $\alpha$-Aluminiumoxid bildet und dann das Natrium-Dotiermittel zufügt.

29. Verfahren nach Anspruch 28, dadurch gekennzeichnet, daß das Natrium-Dotiermittel ein Natriumsalz einer schwachen Säure ist.

30. Verfahren nach Anspruch 28, dadurch gekennzeichnet, daß das Natrium-Dotiermittel Natriumacetat ist.

31. Verfahren nach einem der Ansprüche 28 bis 30, dadurch gekennzeichnet, daß das klare Sol von $\alpha$-Aluminiumoxid durch Peptisieren einer wäßrigen Aufschlämmung von durch Hydrolyse von Aluminium-Isopropoxid oder Aluminium-Butoxid gebildeten $\alpha$-Aluminiumoxids gebildet wird.

32. Verfahren nach einem der Ansprüche 24 bis 31, dadurch gekennzeichnet, daß der gesinterte ß-Aluminiumoxid-Gegenstand durch Eintauchen in das mit Natrium dotierte Sol oder Sol-Gel überzogen wird.

33. Verfahren nach einem der Ansprüche 24 bis 32, dadurch gekennzeichnet, daß der Gegenstand nach dem Überziehen mit dem Sol oder Sol-Gel bei einer Temperatur zwischen 700°C und 1500°C zur Calcinierung des Überzugs hitzebehandelt wird.

34. Verfahren nach Anspruch 33, dadurch gekennzeichnet, daß die Hitzebehandlung bei einer Temperatur im Bereich von 900°C bis 1200°C durchgeführt wird.

35. Verfahren nach Anspruch 30, dadurch gekennzeichnet, daß die Hitzebehandlung bei einer Temperatur im Bereich von 1050°C bis 1100°C durchgeführt wird.

36. Verfahren nach einem der Ansprüche 33 bis 35, dadurch gekennzeichnet, daß die Hitzebehandlung bei der maximalen Calcinierungstemperatur nicht länger als 30 Minuten durchgeführt wird.

37. Verfahren nach einem der Ansprüche 24 bis 36, dadurch gekennzeichnet, daß die Dicke des Überzugs weniger als 2 $\mu m$ beträgt.

38. Elektrochemische Zelle oder andere Energieumwandlungsanlage mit einem festen elektrolytischen Element, dessen Oberfläche zumindest teilweise flüssigem Natrium ausgesetzt ist, wobei das elektrolytische Element ein Substrat aus ß-Aluminiumoxid umfaßt, dadurch gekennzeichnet, daß das Substrat aus ß-Aluminiumoxid einen Überzug aus einem Material besitzt, das Natriumionen leitet, und der Überzug sich auf mindestens dem Teil des elektrolytischen Elements befindet, der dem flüssigen Natrium ausgesetzt ist.

## Revendications

1. Elément d'électrolyte de $\beta$-alumine destiné à servir d'électrolyte solide dans un dispositif de conversion d'énergie utilisant le sodium liquide, caractérisé par un substrat de $\beta$-alumine présentant, sur au moins une partie de sa surface exposée au sodium en service, un revêtement protecteur d'une matière qui est ioniquement conductrice pour ions sodium.

2. Elément d'électrolyte selon la revendication 1, caractérisé en ce que le revêtement est formé de verre.

3. Elément d'électrolyte selon l'une ou l'autre des revendications précédentes, dans lequel le revêtement a une épaisseur notablement inférieure à l'épaisseur du substrat.

4. Elément d'électrolyte selon la revendication 2, dans lequel le revêtement a une résistivité ne dépassant pas $10^4$ ohm-cm à 350°C.

5. Elément d'électrolyte selon la revendication 1, caractérisé en ce que le revêtement est formé par calcination d'un sol ou sol-gel dopé au sodium, appliqué à ladite partie de la surface.

6. Elément d'électrolyte selon la revendication 5, caractérisé en ce que le revêtement comprend de l'alumine dopée au sodium.

7. Elément d'électrolyte selon la revendication 5, caractérisé en ce que le revêtement comprend un $\beta$-ferrite.

8. Elément d'électrolyte selon la revendication 1, caractérisé en ce que le revêtement est une couche lisse d'un composé de sodium formé par cuisson à une température inférieure à la température de frittage de la $\beta$-alumine.

9. Elément d'électrolyte selon la revendication 8, caractérisé en ce que le revêtement a une résistivité ionique inférieure à $5\times10^4$ ohm-cm pour les ions sodium.

10. Pile sodium-soufre comportant un élément d'électrolyte de $\beta$-alumine séparant une région anodique qui contient du sodium d'une région cathodique qui contient du soufre et des polysulfures de sodium, caractérisée par un élément selon l'une quelconque des revendications précédentes.

11. Pile sodium-soufre selon la revendication 10, caractérisée en ce que l'élément est un tube, le revêtement se trouvant à l'intérieur ou à l'extérieur du tube.

12. Procédé de fabrication d'un élément d'électrolyte de β-alumine destiné à servir d'électrolyte solide dans un dispositif de conversion d'énergie utilisant le sodium liquide, caractérisé en ce que l'on fritte une matière formée d'oxyde pour former un substrat céramique de β-alumine et que l'on applique, à au moins une partie de sa surface exposée au sodium en service, un revêtement d'une matière qui est ioniquement conductrice pour ions sodium.

13. Procédé selon la revendication 12, caractérisé par l'application de verre comme matériau pour le revêtement.

14. Procédé selon la revendication 13, caractérisé en ce que l'on revêt la surface du substrat d'unu dispersion, dans un liquide évaporable, d'un verre pulvérisé qui est conducteur des ions sodium et que l'on chauffe le substrat revêtu à une température inférieure à la température de frittage de la β-alumine pour évaporer le liquide et pour former un revêtement de verre lisse.

15. Procédé selon la revendication 14, caractérisé en ce que le milieu de dispersion est un liquide organique.

16. Procédé selon la revendication 12, caractérisé en ce que l'on applique à la surface du substrat une solution d'un composé ionisable de sodium qui est soluble dans le solvant, que l'on évapore le solvant et que l'on cuit alors le substrat revêtu à une température inférieure à la température de frittage de la β-alumine, le composé de sodium étant tel qu'il donne, après cuisson, un revêtement qui est ioniquement conducteur des ions sodium.

17. Procédé selon la revendication 16, caractérisé en ce qu'avant cuisson, on applique plusieurs revêtements de dite solution en évaporant le solvant avant d'appliquer le revêtement suivant.

18. Procédé selon la revendication 16 ou 17, caractérisé en ce que le composé de sodium est tel qu'il donne un revêtement ayant une résistivité inférieure à $5 \times 10^4$ ohm-cm.

19. Procédé selon une quelconque des revendications 16 à 18, caractérisé en ce que le composé de sodium est le tétraborate de sodium.

20. Procédé selon une quelconque des revendications 16 à 18, caractérisé en ce que le composé de sodium est le silicate de sodium ou le phosphate de sodium.

21. Procédé selon la revendication 19, caractérisé en ce que l'on applique à la surface du substrat une solution aqueuse de tétraborate de sodium, que l'on évapore l'eau et qu'alors, on cuit le composant revêtu à une température comprise entre 600 et 750°C.

22. Procédé selon la revendication 20, caractérisé en ce que l'on applique à la surface du substrat une solution aqueuse de silicate de sodium ou de phosphate de sodium et que l'on cuit le composant revêtu à une température comprise entre 1000 et 1100°C.

23. Procédé selon la revendication 21 ou la revendication 22, caractérisé en ce qu'avant cuisson, on applique plusieurs revêtements de la solution en évaporant l'eau avant d'appliquer le revêtement suivant.

24. Procédé selon la revendication 12, caractérisé en ce que l'on revêt la surface du substrat d'un sol ou sol-gel dopé au sodium et qu'alors on calcine, le sol ou le sol-gel étant formé de particules d'une matière qui, lorsqu'elle est dopée au sodium et calcinée, est conductrice des ions sodium.

25. Procédé selon la revendication 24, caractérisé en ce que le revêtement est un sol de particules d'α-alumine dopée par des ions sodium pour former un sol-gel qui forme de la β-alumine lorsqu'on le calcine.

26. Procédé selon la revendication 24, caractérisé en ce que le revêtement est formé de β-ferrite de sodium.

27. Procédé selon la revendication 24, caractérisé en ce que le revêtement est initialement formé d'α-alumine dans laquelle on diffuse des ions sodium.

28. Procédé selon la revendication 24, caractérisé en ce que la matière de revêtement est un sol-gel dopé que l'on forme en formant d'abord un sol limpide d'α-alumine et en ajoutant alors le dopant sodium.

29. Procédé selon la revendication 28, caractérisé en ce que le dopant sodium est un sel de sodium d'un acide faible.

30. Procédé selon la revendication 28, caractérisé en ce que le dopant sodium est l'acétate de sodium.

31. Procédé selon l'une quelconque des revendications 28 à 30, caractérisé en ce que l'on prépare le sol limpide d'α-alumine en peptisant une bouillie aqueuse d'α-alumine formée par hydrolyse d'isopropoxyde d'aluminium ou de butoxyde d'aluminium.

32. Procédé selon l'une quelconque des revendications 24 à 31, caractérisé en ce que l'on revêt par immersion l'objet en β-alumine frittée dans le sol ou le sol-gel dopé au sodium.

33. Procédé selon l'une quelconque des revendications 24 à 32, caractérisé en ce qu'après avoir revêtu l'objet du sol ou du sol-gel, on le traite thermiquement à une température comprise entre 700 et 1500°C pour calciner le revêtement.

34. Procédé selon la revendication 33, caractérisé en ce que le traitement thermique s'effectue à une température comprise entre 900 et 1200°C.

35. Procédé selon la revendication 30, caractérisé en ce que le traitement thermique s'effectue à une température comprise entre 1050 et 1100°C.

36. Procédé selon l'une quelconque des revendications 33 à 35, caractérisé en ce que le traitement thermique ne dure pas plus de 30 minutes à la température de calcination de points.

37. Procédé selon l'une quelconque des revendications 24 à 36, caractérisé en ce que le revêtement a moins de 2 $\mu$m d'épaisseur.

38. Pile électrochimique ou autre dispositif de conversion d'énergie comportant un élément d'électrolyte solide, au moins une partie de la surface de l'élément d'électrolyte étant exposée à du sodium liquide, dans lequel l'élément d'électrolyte comprend un substrat de $\beta$-alumine, caractérisée en ce que ledit substrat $\beta$-alumine présente un revêtement d'une matière propre à conduire les ions sodium, le revêtement se trouvant au moins sur la partie de l'élément d'électrolyte qui est exposée au sodium liquide.